# EUROPEAN PATENT SPECIFICATION

(11) **EP 4 081 823 B1**
(45) Date of publication and mention of the grant of the patent: **04.02.2026**
(21) Application number: 20828822.5
(22) Date of filing: 23.12.2020
(51) Int. Cl.: G01S 7/4863, G01S 7/4865, G01S 7/497, G01S 17/10, G01S 17/42, G01S 17/89

(54) **TIME OF FLIGHT SENSOR**
FLUGZEITSENSOR
CAPTEUR DE TEMPS DE VOL

(30) Priority: 24.12.2019 US 201962953445 P
(43) Date of publication of application: 02.11.2022
(73) Proprietor: ams International AG, 8645 Jona (CH)
(72) Inventor: NELSON, Doug, 5656 AE Eindhoven (NL); HEDGE, Pradeep, 5656 AE Eindhoven (NL); COGAN, Timothy, 5656 AE Eindhoven (NL)
(74) Representative: Ding, Yuan
(86) International application number: PCT/EP2020/087835
(87) International publication number: WO 2021/130347

(56) References cited:
- AT-A1- 513 402
- US-A1- 2004 257 556
- US-A1- 2018 299 552

## Description

### BACKGROUND TO THE INVENTION

Time of flight (ToF) sensors are sensors which determine the distance to a target by emitting light and detecting reflections of the light from the target. Time of flight sensors may be direct time of flight sensors, which directly measure the time between the emission and the detection of the reflection, or indirect time of flight sensors, which emit modulated and indirectly measure the time between the emission and the detection of a reflection by measuring the phase difference between the emitted light and the detected reflection.

In time of flight sensors, not all of the light detected by the sensor may have been originally been emitted by the sensor and then reflected from the target. The sensor may also detect light originating from other sources in the environment and/or light reflected from objects other than a target, this can create background noise. Light detected by the sensor which is not an emission from the sensor and reflected from the target is sometimes referred to as optical crosstalk.

The emitters and the detectors of time of flight sensors are enclosed by transparent covers such as sheets of glass. In some time of flight sensors, the emitter and the detector are located within separate adjacent cavities covered by separate transparent covers. In other time of flight sensors, both the emitter and the detector are located beneath a single transparent cover, either in the same cavity or in separate cavities behind a shared cover.

In time of flight sensors with only a single transparent cover, a major source of optical crosstalk is light from the emitter which is reflected off the cover, or off contamination on the cover (sometimes referred to as smear or smudge). In sensors with the emitter and the detector in separate cavities between a single cover, light from the emitter may be totally internally reflected within the cover to reach the emitter, resulting in optical crosstalk. As the cover is close to the emitter and detector, optical crosstalk reflected off the cover will have travelled a relatively short distance and so will be recorded as having a relatively short time of flight.

The presence of such optical crosstalk may prevent a time of flight sensor from accurately determining when a target is present (particularly at ranges close to the sensor itself) and/or prevent an accurate distance measurement to the target from being made using the sensor.

The document US2004257556 discloses an object recognition apparatus for vehicles which is equipped with a radar. The apparatus is designed to detect adhesion of any dirt to the radar which will disturbs emission of radar waves to and reception radar echoes from a target. However, it does not disclose any solution to calibrate the effect of dirt on the detection results.

The document AT513402 A1 discloses a method for correcting the interference reflections of laser pulses occurring on the common support structure of a transmitter and a receiver by subtracting a stored reference interference signal from the reception signal in order to obtain a corrected reception signal. If the reference noise signal is not pre-modelled by calculation but is determined from recordings of the noise reflections, either in a pre-calibration phase or "online", an alarm message can be generated if it exceeds a specified threshold. This makes it possible, for example, to detect a sudden deterioration in the transmittance of the exit window of a laser rangefinder or scanner due to dirt, fogging, damage, etc. However, in this sudden deterioration, the detection results cannot be calibrated.

The document US2018/299552 A1 discloses a light ranging system including a laser device and an imaging device having photosensors. The reflections can vary greatly depending on the reflecting surface shape and reflectivity. The signal measured by photosensors can be filtered with a number of matched filter designed according to profiles of different reflected signals. A best matched filter can be identified, and hence information about the reflecting surface and accurate ranging information can be obtained.

### STATEMENT OF THE INVENTION

According to an embodiment, there is provided a method of measuring a distance using a time of flight sensor comprising a substantially transparent cover covering a light emitter and one or more photodetectors. The method comprises emitting a series of pulses of light from the light emitter; and using the one or more photodetectors to obtain a distribution of times at which at least one photodetector of the one or more photodetectors detected photons after each emission of the series of pulses of light. Each of the detection periods is divided into an identical series of time intervals. The time intervals of the series may be relative to the emission immediately preceding, during, or otherwise associated with the detection period.

The method further comprises: if the distribution of times comprises only a single peak, analysing the single peak to determine if the single peak includes counts of photons reflected from a target. If the single peak includes counts of photons reflected from a target, the method further comprises measuring the separation between a reference time and a point of the single peak.

The method advantageously allows the time of flight measurements to detect, and measure distances to targets whose reflections are otherwise difficult to distinguish from reflections off the cover of the sensor and/or material thereon.

The distribution of times at which the at least one photodetector detected photons after each emission of the series of pulses of light may comprise optical crosstalk, which may include background or noise light from sources other than the light emitter and/or light emitted from the light emitter and reflected off the cover or material thereon. If no object is present within the range and field of view the at least one photodetectors, the distribution may comprise background noise with a single peak at a time corresponding to time taken for a photon emitted by the light emitter to reflect off the cover or material thereon to be detected by one of the at least one photodetector.

If, when performing the method, the distribution of times at which the at least one photodetector detected photons after each emission of the series of pulses of light comprises two or more separate peaks then the earliest peak may be assumed to be produced by optical crosstalk reflections off the cover only and the one or more later peaks may be assumed to be produced by reflections off targets. The possibility of the earliest peak including reflections from a target close to the cover may be discarded as such a target would block light from other more distant targets, preventing the later separate peaks.

In such situations, the distance to the targets whose reflections produced each of the one or more later separate peaks may be determined by measuring the separation in time between the earliest peak and the later separate peak. This separation in time will be the difference in the travel time between a photon detected after reflecting off the cover and a photon detected after reflecting off the target. The separation in time may be multiplied by half the speed of light to obtain the distance between the cover and the target.

If instead, the distribution comprises only a single peak, this peak may be due to light reflecting off the cover or material thereon only, or may be due to both light reflecting off the cover or material thereon, and light reflecting off a target close to the cover, such that the otherwise separate cover reflection peak and target peak overlap and combine to form a single peak.

In the method, such a single peak is analysed to determine if it includes counts of photons reflected from a target. This is preferably performed by comparing one or more aspects of the single peak (such as its magnitude and/or the time at which it occurs) to one or more reference parameters of a peak only comprising reflections off the cover and/or material thereon.

If the single peak does include counts of photons reflected from a target, it is not possible to measure the separation between peaks as described above. Instead, the separation between a reference time (which preferably corresponds to a premeasured travel time for light reflected off the cover) and a point of the single peak is measured.

The method therefore advantageously allows distances to be measured to targets which are close enough to the cover that their reflections overlap with optical crosstalk due to reflections off the cover.

The time of flight sensor comprises a substantially transparent cover covering a light emitter and one or more photodetectors.

The sensor comprises a cover or window covering the emitter and the one or more photodetectors, and which is at least substantially transparent and may be entirely transparent. The method may be for measuring optical crosstalk due to reflections of light emitted by the light emitter and reflected off the cover and/or material thereon.

The emitter and the one or more photodetectors may be in a shared indent or cavity beneath the cover, or the emitter may be in a first indent or cavity beneath the cover and the one or more photodetectors may be in a second indent or cavity beneath the cover. The cover is preferably transparent, and may be formed of glass or plastic.

The cover may protect the one or more photodetectors and the light emitter from impacts, dirt or debris and may provide additional optical filtering for the sensor. In use, when the pulses of light are emitted to perform time of flight and/or calibration measurements, some of the light may be reflected off the cover to the one or more photodetectors.

In embodiments where the emitter and the one or more photodetectors are in separate cavities or indents beneath the cover, or wherein a barrier is provided between the emitter and the one or more photodetectors within a shared indent or cavity, light may be unable to pass from the emitter to the one or more photodetectors by reflecting off the exterior of the cover inside the cavity or indent. However, light from the emitter may be totally internally reflected within the cover, and thereby pass between the separate indents or cavities to the one or more photodetectors through the inside of the cover.

In embodiments where the emitter and the photodetector are within the same indent or cavity and are not separated, light may both be reflected off the exterior of the cover and totally internally reflected within the cover to reach the one or more photodetectors.

Photons reflected off the cover and/or material thereon will be detected at earlier times after their emission from the light emitter. In some embodiments, the time at which these photons are detected may be used to provide a zero distance for time of flight distance measurements when distributions comprise multiple separate peaks (as the distance between a target and the cover glass may substantially correspond to the distance between a target and the exterior of the time of flight sensor).

The one or more photodetectors preferably detect photons incident thereon and/or are preferably arranged to detect photons emitted by the emitter and reflected off one or more targets.

The one or more photodetectors comprised by the sensor are preferably a plurality of photodetectors, which may each separately and independently detect photons. For example, the one or more photodetectors may be an array of photodetectors.

In preferred embodiments, the plurality photodetectors may be used to obtain a plurality of distributions, each distribution being the distribution of times at which at least one photodetector of the plurality of photodetectors detected photons after each emission of the series of pulses of light.

The method preferably further comprises, if any of the distributions comprise only a single peak, analysing the single peak(s) to determine if the single peak(s) includes counts of photons reflected from a target, and if any of the single peak include counts of photons reflected from a target, measuring the separation between a reference time and a point of those single peaks.

The plurality of distributions preferably each being the distributions of times at which a different photodetector or group of associated photodetectors detected photons after each emission. In some embodiments the times at which each of the plurality of photodetectors comprised by the sensor are included in one of the plurality of distributions.

One, some or all of the plurality of distributions may be of times at which a single photodetector detected photons. Alternatively, or additionally, one, some or all of the plurality of distributions may be of times at which a group of associated photodetectors detected photons. The single photodetector, or group of associated photodetectors, may be the photodetectors of a pixel of an array. If the at least one photodetector is a plurality of photodetectors, the plurality of photodetectors may be physically grouped together, for example comprising a block of adjacent photodetectors within an array.

In some embodiments, whether photodetectors are grouped in this manner, or by which group or pixel they are comprised by may be reconfigurable, for example, to vary the number of photodetectors comprised by each group or pixel in order vary the resolution of the array of photodetectors and the number of photons detected by each group of associated photodetectors.

The sensor comprising a plurality of photodetectors and being used to obtain a plurality of distributions of times at which different single photodetectors or groups of associated photodetectors detected photons after each emission may allow the sensor to be or to act as a time of flight camera and/or to produce a range image with a plurality of pixels, each having an associated distance measurement derived from a different distribution of times at which one or more different photodetectors detected photons.

If at least one photodetector for which a distribution of times at which the at least one photodetector detected photons is a plurality or group of associated photodetectors, the distribution of times is preferably the distribution of times at which any of those photodetectors detected photons after each emission of the pulses of light.

The time of flight sensor may comprise one or more passive optical components which may be for focusing, and/or arranged to focus, incident light (such as light reflected off a target) onto the one or more photodetectors. For example, the time of flight sensor may comprise a lens arranged to focus incident light onto the one or more photodetectors. The one or more passive optical components may be intermediate the one or more photodetectors and the cover, or may be comprised by or formed integrally with the cover.

The time of flight sensor may comprise one or more optical filters which may be arranged to filter light incident upon the one or more photodetectors. For example, the time of flight sensor may comprise one or more optical filters intermediate the one or more photodetectors and the cover, or intermediate the one or more photodetectors and a passive optical component such as a lens.

The one or more photodetectors may be arranged adjacent and/or proximate to the light emitter, for example, within the same indent or cavity, or within adjacent indents or cavities, preferably beneath a shared cover as described above. The photodetectors are preferably arranged to detect light emitted by the light emitter and reflected from a target; for example, the photodetectors may comprise detecting elements or surfaces facing in the same direction as the light emitter.

The time of flight sensor is preferably a direct time of flight sensor, which may measure the time between the emission of a pulse of light and the subsequent receipt of a photon (in one of the measurement steps) directly, for example, by synchronising the emitter and the one or more photodetectors. The sensor may comprise driving electronics which may provide high speed signals for controlling and synchronising the emitter and the one or more photodetectors.

Alternatively, the time of flight sensor may be an indirect time of fight sensor. The emitted pulses of light may be modulated and the photodetectors may detect light pulses incident thereon and detect the phase difference between the detected waveforms and the emitted waveform of a pulse of light. For example, the waveform of light detected by a photodetector may be correlated with a photodetector waveform (for example, which modulates the gain of the photodetector). This may produce a correlation waveform, which may be sampled to calculate a phase difference between emitted and detected waveforms. This phase delay may correspond to and may be converted into a distance or time of travel.

The method comprises emitting a series of pulses of light from the light emitter.

The pulses of light are preferably of equal or substantially equal duration (for example, lasting 500 picoseconds), and the time gaps between successive pulses of light are preferably of substantially equal duration. For example, each pulse of light may be emitted at the same point in time in or relative to one of a series of detection periods, each of equal duration.

The emitted pulses of light are preferably of a fixed wavelength, and the light emitter is preferably a laser, such as a semiconductor laser diode. In some embodiments the light emitter may be a vertical-cavity surface-emitting laser (VCSEL). In embodiments where the light emitter only emits light at a specific wavelength, the photodetectors may only detect incident photons at or around that wavelength, this may minimise the number of background photons detected by the photodetectors that did not originate from the light emitter.

The series of light pulses may comprise more than 50,000 light pulses, or more than 75,000 light pulses, more than 100,000 light pulses, more than 250,000 light pulses, more than 500,000 light pulses, or more than 750,000 light pulses.

The number of light pulses in the series may be variable. For example, the sensor may be operable in one or more low power and/or short measurement duration modes, with comparatively low numbers of light pulses and may be operable in modes with comparatively high numbers of light pulses to ensure significant peaks are obtained in the one or more distributions. For example, the method may be performed with series with any of a plurality of numbers of pulses of light between 80,000 and 800,000 light pulses.

Emitting a series of light pulses and using the one or more photodetectors to detect photons after each emission allows each of the one or more photodetectors to detect a large number of photons and one or more distributions of the times at which at least one photodetector detected photons after each of the series of emissions to be obtained.

Repetition of the measurement steps may be necessary because the photodetectors may be unable to detect a second photon for a window of time after detecting a first photon, therefore the number of photons each photodetector may detect during a single measurement step may be limited, potentially resulting in an inaccurate distribution.

The method further comprises using the one or more photodetectors to obtain a distribution of times at which at least one photodetector of the one or more photodetectors detected photons after each emission of the series of pulses of light.

One, some or all of the one or more photodetectors may be photodiodes or other sensors for detecting photons incident thereon. One, some or all of the photodetectors may be single photon avalanche diodes (SPADs) which may produce a large short duration avalanche current upon detection of a photon. In preferred embodiments each of the one or more photodetectors is a single photon avalanche diode (SPAD).

The times comprised by the, or each distribution at which at least one photodetector (such as a single photodetector, or group of associated photodetectors as described above) detected photons may include times during and/or before each emission of the series of light pulses, in addition to times after.

For example, the, or each distribution of times is preferably a distribution of times at which at least one photodetector (such as a single photodetector, or group of associated photodetectors as described above) detected photons before, during and after each emission of pulses of light.

Including the times at which the at least one photodetector detected photons during and/or before each emission of a pulse of light in the distribution obtained for the at least one photodetector may advantageously allow a background or noise level of photon detection (such as a background or noise frequency of photon detections per unit time) excluding reflected emitted photons to be more accurately determined. This may facilitate the detection of photons reflected off targets or other structures, for example by contributing to the determination of a detection threshold.

The times at which at least one photodetector detected photons - which are comprised by the, or each distribution - may be relative to one of the emissions of the series of pulses of light and/or relative to a detection period in which the photons were detected. In preferred embodiments the times at which the at least one photodetector detected photons are relative to an emission of one of the series of pulses of light during or immediately preceding a detection period in which the photon was detected.

Performing the method may comprise a plurality of such detection periods, preferably one such detection period for each emission of a light pulse of the series. Each detection period preferably beginning before, during, and/or immediately after one emission of the series (with which the detection period may be considered to be associated), and preferably ends before a subsequent emission of the series.

The plurality of detection periods are preferably of equal duration. This duration of the detection period is preferably equal to, substantially equal to, or less than the sum of the duration of one of the light pulses and the duration of one of the time gaps between emissions light pulses of the series.

Each emission of a pulse of light is preferably at the same time within and/or with respect to the detection period with which that emission is associated.

The detection period may begin less than 5000 picoseconds before, less than 2500 picoseconds before, more than 500 picoseconds before and/or more than 1000 picoseconds before the emission of a pulse of light with which the detection period is associated. The detection period may begin more than 5000 picoseconds after, more than 10,000 picoseconds after, more than 20,000 picoseconds after, more than 30,000 picoseconds after, and/or less than 50,000 picoseconds after the emission of a pulse of light with which the detection period is associated.

In some embodiments, there may be no gaps in time between successive or consecutive detection periods Alternatively, there may be time gaps between successive or consecutive detection periods, these time gaps may be of equal duration.

The duration of a portion of a detection period of the measurement steps following the emission of a pulse of light may correspond to a maximum range at which the time of flight sensor may detect a target when performing the method. For example, in an embodiment wherein the detection period lasts 35000 picoseconds, with a pulse of light being emitted 2000 picoseconds after the beginning of the detection period, the maximum time of flight of a reflected photon which may be detected is 33000 picoseconds, corresponding to a round trip travel distance of 9.89 metres (to 3 significant figures) and to a sensor range of 4.95 metres (to 3 s.f.). Alternatively, the maximum range of the sensor may be less than that calculated from the detection periods; for example, the sensor may only detect and/or measure distances targets up to a maximum time within the distribution.

The times of the, or each distribution at which at least one photodetector detected photons, are preferably the times in and with respect to the detection period in which that photon was detected.

The distribution therefore preferably comprises a plurality of times at which photons were detected, each relative to detection period in which that photon was detected. In preferred embodiments in which the detections periods are of equal duration, this will be a plurality of times within a range equal to the duration of the detection periods.

In such embodiments, the time at which a photodetector detects a photon may be which of the plurality of time intervals the photon was detected during. The, or each, distribution may comprise counts of the total number of photons detected by the at least one photodetector during all of the time intervals at a given time (spanning a given range of times) with respect to the emission during, immediately preceding, or otherwise associated with the detection period (comprising the time interval) in which the/that photon was detected.

The distribution preferably comprises counts of the total number of photons detected by the at least one photodetector during all instances of each time intervals of the identical series of time intervals into which each of the detection periods is divided.

The, or each, distribution of times may be obtained by counting the number of photons detected by the at least one photodetector during each of the plurality of the recurring time intervals of the detection period.

A counted number of photons detected by the one or more photodetectors during all of the time intervals at each of the plurality of times may be or may contribute to values of the distribution for time intervals at the plurality of times.

A counted number of photons detected by the at least one photodetectors during a time interval of the plurality of time intervals may be or may contribute to a value of the distribution for the time interval of the plurality of time intervals. This time interval may be a bin of the distribution.

Repeated time intervals of the identical series of time intervals into which the detection periods are identically divided may correspond to bins of the distribution obtained for the, or each, at least one photodetector. The or each distribution may comprise a plurality of bins with counts, the count of each being the total number of photons detected by the at least one photodetector during all of the time intervals at each of a plurality of times with respect to light pulse emission of the measurement steps in which they occur, over the course of the series.

Each of the time intervals of each of the detection periods may have an equal or substantially equal duration. In such embodiments, the ratio of frequencies of photon detections between different time intervals will be proportional to the ratio of the number of photon detections counted during those time intervals.

Each time interval may be greater than 50 picoseconds, greater than 70 picoseconds, or greater than 90 picoseconds. Each time interval may be less than 200 picoseconds, less than 150 picoseconds, less than 125 picoseconds, or less than 110 picoseconds. In some embodiments the time intervals may be 100 picoseconds.

For example, each detection period may consist of 350 consecutive time intervals, each of 100 picoseconds. A pulse of light being emitted 2000 picoseconds after the beginning of the detection period results in a sensor range of 4.95 metres (to 3 s.f.) as described above.

The, or each distribution may comprise counts of the numbers of photons detected by the at least one photodetector at a plurality of different times or within a plurality of different time intervals, with respect to each emission of the series. The, or each distribution may therefore be a frequency distribution.

The plurality of time intervals may be relative to the emission of a pulse of light during, immediately preceding, or otherwise associated with the detection period in which the photons were detected. The plurality of time intervals may be bins of the distribution.

For example, the distribution may be or may comprise counts of the total number of photons detected by the at least one photodetector in all repetitions of each of a series of identical time intervals which were repeated with each detection period and light pulse emission associated therewith.

The frequency of photon detections in each of the time intervals may be the count of that time interval divided by the duration of the time interval. The frequency of each time interval of the frequency distribution being proportional to the probability of a photon being detected by that photodetector in that time interval. In embodiments wherein the time intervals are of equal duration, the frequencies of the time intervals are proportional to the counts of the time intervals.

In some embodiments the distribution may be or may comprise a graphical representation of the measured times. In preferred such embodiments, the distribution may be a histogram. The histogram may comprise bins with counts corresponding to time intervals (such as time intervals relative to the detection period that the counted photons were detected in and/or to the emission associated therewith) and the number or photons detected therein respectively.

The counts of numbers of photons detected during time intervals and/or bins may be stored in one or more memory or hardware locations. For example, the count of each bin and/or time interval of each at least one photodetector's distribution may be stored in a separate memory location. When a photodetector detects a photon, it may increment a count in a memory or hardware location (for example by producing an avalanche current thereto in embodiments wherein the photodetector is a SPAD). Which of a plurality of memory or hardware locations the count is incremented in may be determined by a high speed signal from driving electronics which may be comprised by the sensor, each memory or hardware location may correspond to a specific repeated time interval.

In embodiments wherein the distribution comprises only counts of the number of photons detected by that photodetector in each of a plurality of time intervals, the distribution may be obtained by the process of counting these numbers, and may be embodied by storing the numbers in one or more memory or hardware locations. In embodiments wherein the distribution is or comprises a graphical representation of the measured times, such as a histogram, the graphical representation may be obtained by being generated or plotted by a processor.

The method comprises, if the distribution of times comprises only a single peak, analysing the single peak to determine if the single peak includes counts of photons reflected from a target.

In embodiments where the distribution is or comprises a graphical representation, such as a histogram, the peaks may be peaks thereof.

Alternatively, or additionally, peaks may be parts (such as one or more consecutive time intervals) of the distribution which are above a predetermined threshold. For example, above a threshold frequency (a threshold number of photon detections per unit time), which may be a threshold count of photon detections per bin or time interval of the distribution. In some embodiments, peaks may be parts of the distribution which include a local maximum frequency (and or a local maximum count per time interval or bin) and are above the predetermined threshold frequency.

Such a threshold frequency may be dependent on background or noise frequency of the distribution, on the number of pulses of light comprised by the series, upon the local maximum frequency of the part of the distribution, upon the average frequency of the distribution, upon the absolute maximum frequency of the distribution and/or upon other statistical measures, such as the standard deviation from an average frequency.

In some embodiments, the threshold frequency or count for a peak to be detected may be a function of the time in the distribution. For example, the threshold may be higher at earlier times which may be closer to the expected peak due to reflections off the cover.

For example, in some embodiments, a peak may be or may comprise any time interval whose frequency is a local maximum and above a threshold frequency and any time intervals contiguous thereto with frequencies above that threshold frequency or a different threshold frequency.

In some embodiments, each peak may comprise a time interval with a local maximum of the distribution and any contiguous time intervals therewith above a threshold.

For example, a peak may be any time interval with a frequency which is a local maximum and which is at least six standard deviations of the distribution above a noise frequency baseline, as well as any time intervals contiguous thereto with frequencies at least half that of the local maximum frequency of the peak, or at least double a background or noise frequency of the distribution.

An average background or noise frequency or count may be determined by averaging the frequencies or counts of time intervals which are not comprised by a peak, or by averaging the frequencies or counts of time intervals before the emission of a light pulse. In the method wherein each detection period is divided into an identical series of time intervals which repeat with each measurement step, and a pulse of light is emitted at the same point in each detection period, the average background or noise detection frequency of a frequency distribution may be determined by averaging the frequencies of the repeated time intervals before the light pulse emission.

The distribution may be determined to comprise only a single peak if any portions of the peak which are determined to be, or be comprised by a peak are not separate.

According to the invention the method comprises, if the, or each, distribution of times comprises two or more separate peaks, measuring the separation in time between the earliest peak and at least one of the one or more other peaks. The separation in time between the earliest peak and the second earlies peak, the largest of the later peaks, or each of the later peaks may be determined. The separation between peaks may be measured between the maxima of the peaks.

The separation in time may be divided by twice the speed of light to determine a distance between the cover of the sensor and the target whose reflections produced the peak to which the separation was measured.

Two peaks may be determined to be separate if the distribution comprises a predetermined length of time, or a predetermined number of bins or time intervals intermediate the two peaks (for example, intermediate bins comprised by the two peaks, or intermediate the times at which the maxima of the two peaks occur), which are not comprised by a peak and/or are below a maximum frequency (which may be dependent upon a background or noise frequency, upon the local maximum and/or threshold frequencies of one or both of the two peaks, upon on the number of pulses of light comprised by the series, upon the average frequency of the distribution, upon the absolute maximum frequency of the distribution, upon other statistical measures such as the standard deviation from the mean frequency and/or upon the actual or minimum number of separating time intervals).

For example, two peaks may be separate if the frequency distribution comprises one or more time intervals with frequencies less than a set multiple of standard deviations (such as 2.5 standard deviations) above the average background or noise frequency are between the two peaks.

In some embodiments, peaks may be determined to be separate if they are separated by at least a predetermined length of time. In further embodiments two peaks may be determined to be separate if the earliest peak is within a predetermined cover reflection peak window and the later peak is separated from the earlier peak by at least a predetermined length of time. The predetermined length of time may be predetermined number of bins or time intervals of the distribution, such as 1.5 bins.

In alternative embodiments, two peaks may be determined to be separate if the distribution comprises a portion (such as one or more time intervals) between the peaks which is not comprised by a peaks and/or is at, around, or below a threshold or noise level. Alternatively, or additionally, two peaks may be separate if they do not overlap or interfere with each other.

In some embodiments, the distribution may comprise two separate peaks if (and one or more parameters of the earliest peak may be recorded if) the distribution comprises two or more peaks and the second earliest peak is after a threshold time. The second earliest peak may be after the threshold time if its maximum is after the threshold time, or if any portion of the peak is after the threshold time. The threshold time is preferably a time before which a peak will overlap, interfere and/or not be separate from a peak due to reflections off the cover or material thereon.

In some embodiments, the threshold time may be dependent upon one or more recorded parameters of the earliest peak of one or more previous measurements, such as the time at which the earliest peak occurred in a previous measurement. Alternatively, or additionally, the threshold time may be dependent upon the time at which the earliest peak of the frequency distribution is located.

Whether the distribution comprises a single peak, and/or whether the distribution comprises two or more separate peaks may be determined by a processing means, which may be comprised by, or be in communication with the time of flight sensor.

If the distribution comprises a single peak, the method comprises analysing the single peak to determine if the single peak includes counts of photons reflected from a target. The method preferably comprises analysing the single peak to determine if the single peak includes counts of photons reflected from a target and counts of photons reflected off the cover.

Analysing the single peak preferably comprises comparing one or more parameters of the peak to one or more reference parameters (and/or to thresholds of the one or parameters, which may be related to and/or derived from the one or more reference parameters).

The one or more parameters of the single peak may comprise: the time at which the reference peak occurs (for example, the range of times of the distribution comprised by the peak, or the time at which the maximum of peak occurs), the shape of the peak, the number of photon detections comprised by the peak (or some other measure of the total energy of the peak), the height of the peak (for example, the maximum number of photons detected in a single bin or time interval of the peak, or a height of the peak calculated from the counts of bins, such as using quadratic interpolation), the width of the peak, the full width at half maximum of the peak, and/or other measurable parameters of the peak. Measurements of the number of counts in the peak and/or in bins or time intervals thereof, may have a background or threshold level subtracted therefrom.

Parameters (of the single peak, and/or of a reference peak as described below) may be parameters of a peak comprising the counts of each of the bins or time intervals comprised by the peak, or of a calculated fit to the counts of the bins, for example to a curve fitted to the counts of each of the bins using quadratic interpolation. For example, the one or more parameters may comprise the height (in photon detection frequency) and/or the area (in number of detected photons) of such a fitted peak.

The one or more reference parameters may be the same parameters as the one or more parameters but of a peak comprising only reflections off the cover and/or material thereon.

The one or more reference parameters may be parameters of a reference peak of a reference distribution, preferably for the at least one photodetectors whose detection times are comprised by the distribution comprising the single peak. The reference distribution is preferably obtained by: emitting a series of pulses of light from the light emitter with no objects within a range and field of view of the at least one photodetectors; and using the one or more photodetectors to obtain the reference distribution of times at which the at least one photodetector of the one or more photodetectors detected photons after each emission of the series of pulses of light.

Analysing the single peak to determine if it includes counts of photons reflected from a target may therefore comprise comparing one or more parameters of the peak to one or more parameters of a reference peak of a reference distribution of times obtained by: emitting a series of on ore more pulses of light from the light emitter with no objects within a range and field of view of the at least one photodetectors; and using the one or more photodetectors to obtain the reference distribution of times at which the at least one photodetector of the one or more photodetectors detected photons after each emission of the series of pulses of light.

In embodiments comprising a plurality of photodetectors used to obtain a plurality of distributions, each distribution being the distribution of times at which one or more photodetectors of the plurality of photodetectors detected photons after each emission of the emissions of the pulses of light, a plurality of reference distributions are preferably obtained. In preferred such embodiments, a reference distribution is obtained for each at least one photodetector for which a distribution of times is obtained when performing the method (for example, each single photodetector or group of associated photodetectors as described above). Different reference peaks, and different values of parameters thereof may therefore be obtained for each at least one photodetector.

The steps for obtaining the reference distribution may comprise any optional feature of the corresponding steps of the method described herein.

The, or each, reference distribution, reference peak, and/or reference parameter may be obtained in a factory calibration operation, for example, when the time of flight sensor was manufactured. Alternatively, the, one, some, or all of the reference distributions, reference peaks, and/or reference parameters may be updated by performing specific calibration measurements, and/or by recording distributions, peaks, and/or parameters obtained in measurements in which no target was detected, or in which no target was detected below a threshold range or separate from the peak due to reflections off the cover.

The, or each, reference distribution is preferably obtained in an arrangement with little or no ambient light. This may advantageously minimise or remove background or noise optical crosstalk from the reference distribution.

In some embodiments, the reference distribution, reference peak and/or reference parameters thereof of the, or each, at least one photodetector may be an average of a plurality of such reference distributions, reference peaks and/or reference parameters, which may be obtained in a plurality of reference measurements as described above.

The one or more parameters of the reference peak may include the total number of photons detected in the reference peak and the time in the distribution at which the reference peak is located. A background or noise level of the distribution comprising the single peak may be added to the reference peak or subtracted from the single peak prior to said comparing.

The number of pulses of light emitted during the obtaining of the, or each, reference distribution may be equal to the number of pulses of light of the series of the method, which may be used to obtain the distribution with the single peak.

However, in some embodiments, these series of light pulses may not, or may not necessarily comprise the same number of light pulses (for example, in embodiments wherein the number of light pulses is variable depending on in which of a plurality of modes the time of flight sensor is operating and/or the method is being performed). In such embodiments, one, some, or all of the one or more parameters of the single peak, and/or the one or more reference parameters (such as the number of photon detections counted in the single peak and/or in the reference peak) may be normalised with respect to difference in the number of pulses of light in the two series. For example, a reference parameter may be multiplied by the ratio of the number of pulses emitted to obtain the reference to the number of pulses emitted to obtain the distribution comprising the single peak.

In preferred embodiments, the single peak may be determined to include counts of reflections off a target if a count of frequency of photon detections of the peak (such as the total number detections within the peak, or the maximum frequency of photon detections of the peak) exceeds a reference number of photon detections peak (such as the total number detections within a reference peak, or the maximum number of photon detections within a bin or time interval of a reference peak) by more than a threshold margin. In such embodiments, an average background noise frequency of photon counts per the time interval considered may be added to the number of photons of the single peak or subtracted from the reference number of photons.

Alternatively, or additionally, the single peak may be determined to include counts of reflections off a target if the time at which the single peak occurs (such as the range of time of the distribution comprised by the peak, or the time or time interval at which the maximum of the peak occurs) exceeds a reference time (such as the range of time of a reference distribution comprised by a reference peak peak, or the time or time interval at which the maximum of a reference peak occurs) by less than a threshold margin.

In preferred embodiments, the single peak may be determined to include counts of reflections off a target if a count or frequency of photon detections of the peak exceeds a reference number of photon detections peak by more than a threshold margin and the time at which the single peak occurs exceeds a reference time by less than a threshold margin.

Alternatively, or additionally, the single peak may be determined to include counts of reflections off a target if one or more other parameters of the single peak differ from equivalent reference parameters by more or less than threshold margins.

The threshold margins are preferably predetermined, and may be determined experimentally. For example, by performing additional calibration measurements with targets present and comparing the distributions obtained to the reference peak described above.

In alternative embodiments, a peak may be determined to include counts of reflections off a target if a count or frequency of the single peak (such as maximum frequency of photon detections of the peak) exceeds a threshold. The threshold preferably being a function of time and of one or more parameters of the reference function, such as a count or frequency of a reference peak thereof. Preferably the threshold is a function of time and the maximum frequency of photon detections of the reference peak.

The threshold margin may be constant in a later portion of the distribution, and be an inverse function of time (such as an inverse linear function of time) in a second earlier portion of the distribution. The inverse linear function may be such that the threshold exceeds the amplitude of the reference peak at the time the reference peak occurs. In some such embodiments the threshold may also be constant during a third portion of the distribution earlier than the second portion of the distribution, and preferably earlier than the time at which a reference peak occurs.

If the single peak includes counts of photons reflected from a target, the method comprises measuring the separation between a reference time and a point of the single peak.

The reference time is preferably the time at which the maximum of a reference peak as described above occurred. This time corresponds to the time taken for emitted photons to be detected after being reflected off the cover and/or material thereon.

The point of the single peak may be the maximum of the single peak.

Alternatively, the point of the single peak may be the maximum of the single peak after the frequencies of a reference peak with the reference shape and reference magnitude are subtracted from the frequencies of the single peak. Such a point will typically be later than the maximum of the single peak.In some embodiments the resolution of the time of flight sensor and of measurements made in the distributions produced by the method (for example the times at which peaks are located, the distances between peaks, and/or the height or magnitude of the peaks) may be enhanced using data processing techniques, such as quadratic interpolation. These techniques may, for example, use the magnitude or intensity of a bin with a local maximum count or frequency and of one or more proximate or adjacent bins to more accurately determine the distance to that peak. This may allow the times at which peaks occur, or the separation between peaks to be measured to a greater resolution than the width of the bins comprised by the distribution.

For example, if a peak comprises a plurality of bins equally spaced in time, with a bin with a maximum count, preceded by a bin with a bin with half the maximum count and followed by a bin with three quarters of the maximum count. The true maximum of the peak may be estimated to be intermediate the centres of the bin with the maximum count and the following bin with three-quarters of the maximum count. The true maximum count frequency of the peak may also be estimated to be above the count frequency of the bin with the maximum count. Estimated true maximums of peaks may be determined by fitting curves such as parabolas to points defined by the counts of the bins comprised by the peak.

In features of the method described above, wherein parameters of one or more peaks, such as the time at which a maximum of the peak occurs or the maximum frequency of a peak may be parameters of a peak curve fitted to the counts or frequencies of a plurality of bins instead of parameters of the counts or frequencies of the bins themselves.

In some embodiments, the light emitter may form part of, and/or may be comprised by an optical stack. In such embodiments, the method may measure the level of optical cross talk due to reflections off the cover and/or may calibrate the time of flight sensor in conjunction with the optical stack.

According to another embodiment there is provided a time of flight sensor configured to perform the method described above.

The time of flight sensor may comprise any of the optional features described above with reference to the sensor performing the method, and/or may be configured to perform any optional feature of the method described above.

According to another embodiment there is provided a device comprising one or more sensors according to the second aspect of the invention.

For example, a mobile communications device such as a smartphone comprising one or more sensors according to the second aspect of the invention.

According to another embodiment there is provide a non-transitory storage medium comprising computer instructions executable by one or more processors comprised by or in communication with a time of flight sensor comprising a light emitter and one or more photodetectors, the computer instructions when executed by the one or more processors causing the time of flight sensor to perform a method as described above.

Embodiments will now be described by way of example with reference to the figures.
Figure 1A is a sectional view of a time of flight sensor in which a light emitter and photodetector array are located in a shared cavity beneath a cover;
Figure 1B is a sectional view of a time of flight sensor in which a light emitter and photodetector array are located in separate cavities beneath a shared cover;
Figure 2 is a diagrammatic view of a time of flight sensor;
Figure 3 is a flow chart of a method for measuring distances using a time of flight sensor;
Figure 4A is a histogram obtained by a time of flight sensor with no target present;
Figure 4B is a histogram obtained by a time of flight sensor with a target close to the cover;
Figure 4C is a histogram obtained by a time of flight sensor with a target distant from the cover; and
Figure 5 is graph showing a pair of reference distributions and thresholds for target detections derived therefrom.

### DETAILED DESCRIPTION

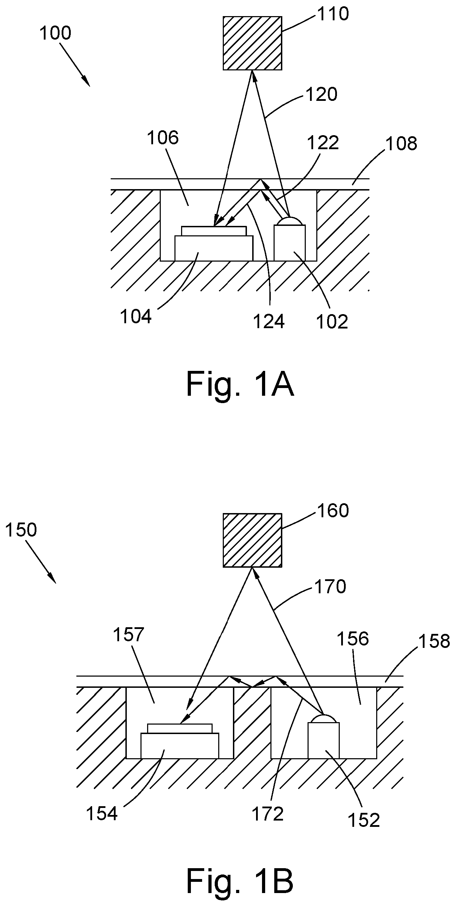

Figures 1A and 1B show respective sectional views of the optical components of two embodiments of time of flight sensors 100, 150. Each of the sensors 100, 150 comprises a light emitter 102, 152 for emitting pulses of light, a photodetector array 104, 154 arranged to detect the reflections of the pulses of light, and a transparent cover 108, 158 arranged to cover the light emitter 102, 152 and the photodetector array 104, 154.

The light emitters 102, 152 and the photodetector arrays 104, 154 are located in cavities 106, 156, 157 underneath the covers 108, 158. In the first time of flight sensor 100, the light emitter 102 and the photodetector array 104 are both arranged within a shared cavity 106. In the second time of flight sensor 150, the light emitter 152 is located within a first cavity 156 and the photodetector 154 is located within a second separate cavity 157. In one embodiment both of the two cavities 156, 157 of the second sensor 150 are covered by the same cover 158, although it is envisaged that, in another embodiment two separate covers may be used to respectively cover the two cavities 156 and 157.

In some time of flight sensors, the cavities 106, 156, 157 may be defined by apertures through a spacer wafer or spacer member arranged between the cover 108, 158 and a substrate on which the light emitter 102, 152 and photodetector array 104, 154 are mounted.

In use, pulses of light are emitted by the light emitters 102, 152 and the photodetector arrays 104, 154 detect photons incident thereon. The times at which photodetectors of the photodetector arrays 104, 154 detect photons are measured relative to the times at which the light emitters 102, 152 emitted pulses of light, in order to determine the travel time of photons emitted by the light emitters 102, 152 and reflected off targets 110, 160 onto the photodetector arrays 104, 154. These measured times allow the distance between the sensors 100, 150 and the targets 110, 160 to be determined.

However, in addition to light 120, 170 which is emitted by the light emitters 102, 152 and reflected off targets 110, 160, the photodetector arrays 104, 154 also detect light from other sources which may be referred to as optical crosstalk. Optical crosstalk includes light which is not emitted by the light emitters 102, 152, as well as light 122, 124, 172 which is emitted by the light emitters 102, 152 and reflected off the covers 108, 158.

In the first sensor 100, light 124 is reflected off the exterior of the surface of the cover 108 adjacent to the cavity 106 and light 122 is totally internally reflected of the interior of the surface of the cover 108 distal from the cavity 106. In the second sensor 150, as the light emitter 152 and photodetector array 154 are located in separate cavities 156, 157, light reflected off the exterior of the surface of the cover 158 will not reach the photodetector array 154. Light 172 totally internally reflected of the interior of the surfaces of the cover 158 travel from the first cavity 156 to the second cavity 157 and thereby from the light emitter 152 to the photodetector array 154. Light may also be reflected off material, such as dirt or other contaminants, on the cover.

Light 122, 124, 172 which is reflected off the cover or material thereon travel shorter distances than light 120, 170 reflected off targets 110, and therefore will be detected at earlier times after the emission of a pulse of light by the light emitter 102, 152.

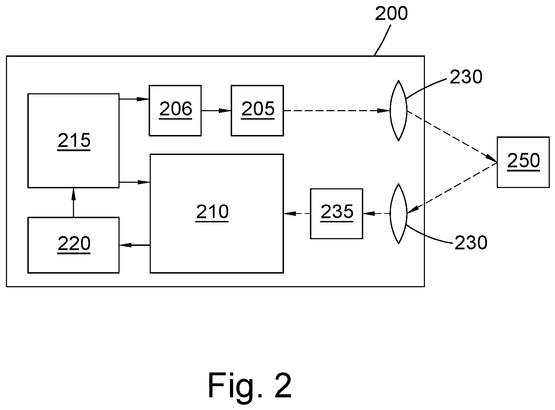

Figure 2 shows a diagrammatic view of a time of flight sensor 200. The sensor 200 comprises a vertical cavity surface emitting laser (VCSEL) 205 for emitting a series of light pulses, a driver 206 for driving the VCSEL 205, a detection module 210 for detecting photons and counting the number of photons detected in each of a plurality of consecutive time intervals which recur with each light pulse emission, a control module 215 for controlling the driver 206 and the detection module 210, a data processing module 220, an optical filter 225 and a pair of passive optical elements 230.

The detection module 210 comprises an array of single photon avalanche diodes (SPADs), one or more time to digital converters (TDCs) and a memory. SPADs are solid state photodetectors which produce a short avalanche current when they detect a photon. The one or more TDCs measure the time between initial signals from the control module (which are at fixed times relative to the emission of light pulses) and signals created the SPADs when they detect a photon. The memory records the times at which photons are detected by the SPADs.

The memory may comprise one or more sets of counters, each set of counters being associated with single SPAD or a group of SPADS (which may be arranged together and may together define or act as a pixel of the array of the detection module). Each counter of a set corresponds to one of a plurality of consecutive time intervals into which a recurring detection period is divided. The detection period, and time intervals thereof, repeat with each light pulse emission of the series of light pulse emissions.

When a SPAD detects a photon, the time within the detection period (and consequently which of the plurality of time intervals) the photon was detected in is determined by the TDC. The counter corresponding to that time interval and associated with that SPAD is then incremented by one. Which of the counters is incremented may be controlled by a shift register.

Each set of counters may therefore obtain counts of the number of photons detected by a SPAD, or by a group of associated SPADs, in each of a plurality of time intervals relative to the emission of a pulse of light in the detection period in which the photons were detected. The relative counts of each time interval corresponding to the relative probabilities of a photon being detected in each of those time intervals when a light pulse is emitted. The counts are a distribution which may be converted into, or visualised as, a histogram; for example, by the data processing module 220.

The control module 215, which may comprise driving electronics, provides high speed signals to the driver 206 and the detection module 210. The signals synchronize the emission of the series of pulses of light and the repeating detection period of the detection module, such that one pulse of light is emitted at the same point in time relative to (and preferably within) each repetition of the detection period.

The data processing module 220 receives data from the detection module. The data may be, or may be derived from, the counted number of photons detected in each of the time intervals by each of the SPADs or groups thereof. The data processing module may determine if the distribution of times at which photons were detected by a SPAD, or group of associated SPADS, over the series of emissions comprises peaks, and may determine whether two or more of those peaks are separate.

If the distribution comprises two or more separate peaks the data processing module 220 may determine the separation between the peaks. This may be used to determine the distance to a target 250. If the distribution instead comprises only a single peak, the data processing module 220 may analyse the shape and magnitude of the peak to determine if it includes only counts of photons reflected off the cover of the sensor, or whether it also includes counts of photons reflected off a target.

The passive optical elements 230 are lens elements. One of the passive optical elements 230 is arranged over the VCSEL 205 and the other is arranged over the detection module 210 and is arranged to focus incident light thereon such that a range image may be produced by the SPAD array. The optical filter 235 is arranged between the detection module and the lens element over the detection module. The lens elements may be comprised by a cover over the VCSEL 205 and the SPAD array.

The sensor 200 may operate under computer instructions which may be stored on one or more non transitory storage media which may be comprised by the control module 215, the data processing module 220, the detection module 210, and/or an external computing device in communication with the sensor, and/or modules thereof. The computer instructions may be executed by one or more data processors comprised the control module 215, the data processing module 220, the detection module 210, and/or an external computing device in communication with the sensor, and/or modules thereof, in order to use the sensor 200 to perform a method 300 for measuring optical crosstalk due to reflections of light pulses off the cover of the sensor 200.

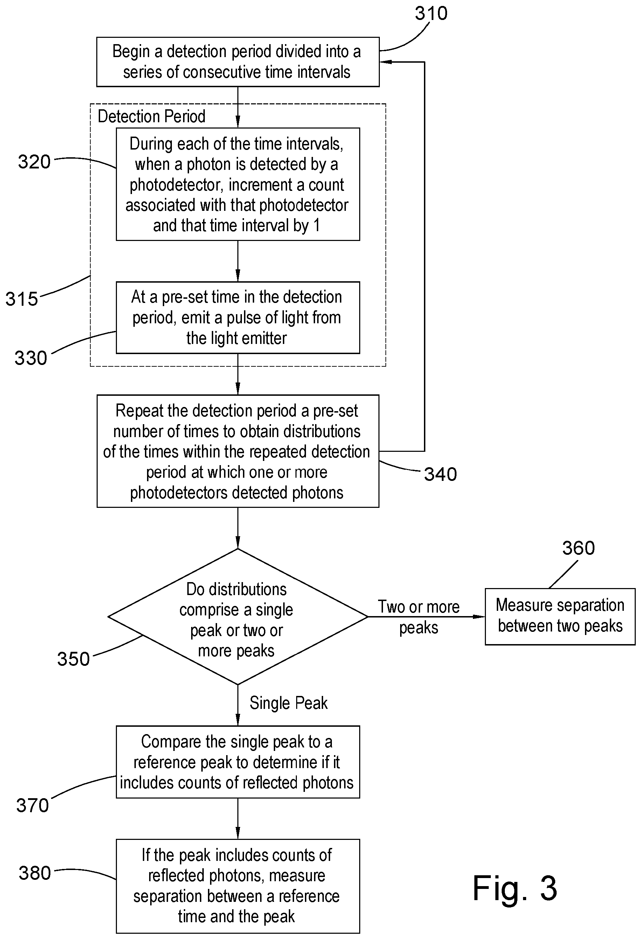

Figure 3 is a flow diagram of a method 300 for measuring distances using a time of flight sensor with a transparent cover covering a light emitter (such as a VCSEL) and one or more photodetectors (such as a SPAD array).

The method comprises emitting a series of light pulses, obtaining one or more distributions of the times at which photons are detected by individual photodetectors, or groups of associated photodetectors, analysing the distributions to determine if they include counts of photons reflected off targets, and if so, the times at which photons reflected off targets were detected. The times at which the one or more photodetectors detect photons being times at which photons were detected within and relative to a recurring detection period 315 which recurs with each emission 330 of a light pulse.

In a first step 310 of the method 300, a detection period 315 is begun. The detection period is divided into a series of consecutive time intervals in which photons may be detected by the one or more photodetectors. The number and duration of the time intervals is pre-set, and the time intervals are preferably of equal duration. For example, the detection period may comprise three hundred and fifty time intervals, each time interval lasting one hundred picoseconds; the detection period therefore lasts thirty-five nanoseconds in total.

During the detection period 315, in a second step 320, if any of the one or more photodetectors detects a photon during any of the time intervals, a count of photons detected in that time interval by that photodetector, or by a group of associated photodetectors comprising that photodetector, is incremented by one.

At a pre-set point in time during the detection period 315, in a third step 330, a pulse of light is emitted from the light emitter. The pulse of light may be emitted after a pre-set number of time intervals and preferably has a fixed duration. For example, the light pulse may last five hundred picoseconds and may be emitted beginning immediately after the twentieth time interval.

In a fourth step 340, the detection period 315 is repeated a predetermined number of times. During each repetition, one light pulse is emitted (at the same point during each repetition of the detection period 315). Each of the time intervals of the detection period 315 is repeated and if a photodetector detects any photons therein, the count of photons detected by that photodetector in that time interval is incremented. The number of repetitions of the detection period may be between 80,000 and 800,000 inclusive; for example, with lower numbers of repetitions being in a low power mode of the sensor, and/or for use with targets with greater reflectivity.

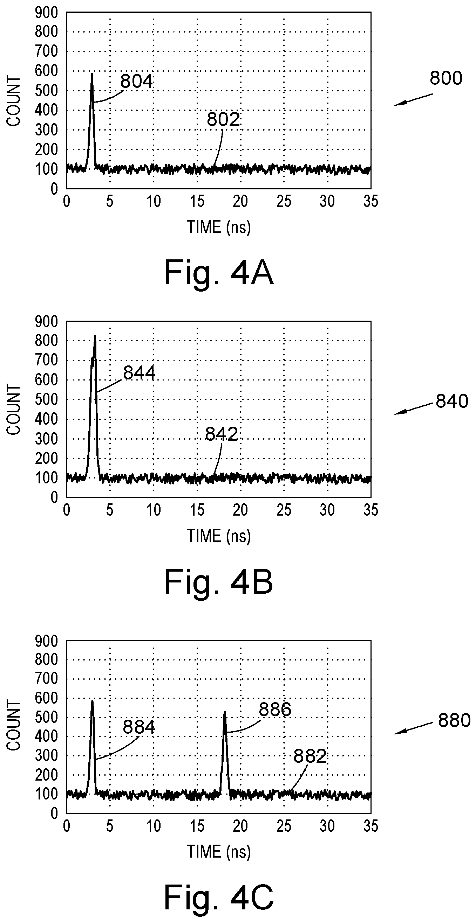

A distribution is therefore obtained for each of the photodetectors, or groups of associated photodetectors, of the number of photons detected by that photodetector, or group of photodetectors, in each of the time intervals. The distribution comprising counts for each of the time intervals of the number of photons detected by that photodetector over all repetitions of the detection period 315. The distribution may be, or may be visualised as, a histogram. Examples of such distributions 300, 440, 480 are shown in Figures 4A to 4C.

In a fifth step, 350, whether the obtained distributions each comprise a single peak or two or more separate peaks is determined.

Peaks may be identified as groups of consecutive time intervals in which the number of counted photons exceeds a threshold value, which may be dependent upon the background or noise count level in the distribution. The background or noise count level of a distribution may be determined by averaging the counts per time interval of time intervals before a pre-set time, for example of time intervals before the emission of a light pulse during the detection period.

Two or more peaks may be considered to be separate if they are separated by a minimum number of time intervals which are not comprised by any peaks. For example, if they are separated by one or more time intervals which are not comprised a peak (such as time intervals which have counts below a threshold value as described above).

If the distribution comprises two or more peaks, in step 360, the separation in time between the earliest peak and each other peak (for example, between the maxima thereof) is measured. These times may be used to calculate the distance between the cover and the targets whose reflections caused the later peaks.

If the distribution comprises only a single peak, in step 370, the peak is compared to a reference peak (or one or more parameters thereof) for the one or more photodetectors whose detections generated the distribution. The reference peak or parameters thereof preferably being stored in a memory of the time of flight sensor.

The single peak may be compared to the reference peak by comparing the total number of counted photon detections in the single peak to the total number of counted photon detections in the reference peak. The total number of photon detections in a peak being proportional to the energy of the peak. The total number of photons in a peak may be the sum of the counts of each of the bins determined to be comprised by the peak, or the sum of the counts of each of those bins after an average background or noise level is subtracted therefrom.

If the single peak comprises a greater total count than the reference peak plus a predetermined threshold margin, the single peak may be determined to comprise counts of photons reflected off a target close to the cover.

The reference peak may be the single peak of a distribution obtained for the photodetector or group of associated photodetectors whose detections generated the distribution when performing a calibration measurement with no targets present in the range and field of view of the photodetector or group of associated photodetectors. Alternatively, the reference peak, and/or parameters thereof may be averages of reference peaks or parameters thereof obtained from multiple such calibration measurements.

The distributions obtained from performing calibration measurements contain only counts of background or noise photons and photons reflected off the cover of the sensor, which will produce the single reference peak.

Such calibration measurements may be performed when, or shortly after, the time of flight sensor is manufactured or assembled and are preferably performed in controlled conditions. The calibration measurements may be performed in situations with a pre-set level of, a minimum level of, or no ambient light; this may control or minimise noise or background counts. The reference peak and/or parameters thereof obtained in these initial measurements may be stored in a memory of the sensor for use when performing the method 300. The calibration measurements are preferably performed at room temperature, or at some other predetermined temperature at which the time of flight sensor is intended to primarily operate.

Alternatively, calibration measurements may be performed at times after the sensor has been manufactured and/or used, and the reference peak and/or parameters thereof may be updated. For example, when a time of flight measurement is performed using the time of flight sensor and a distribution for a photodetector or group of associated photodetectors is obtained with two or more separate peaks, the earliest peak may be assumed to correspond to counts of photons reflected off the cover only, and the earliest peak and/or parameters thereof may be recorded as the reference peak or parameters thereof, updating and/or replacing earlier stored peaks and/or parameters.

The predetermined threshold margin that the total count of a single peak must exceed for the peak to be determined to include counts of reflections off a target may be determined by performing additional calibration measurements with targets present and comparing the distributions obtained to the reference peak described above. For example, a minimum threshold margin for a target to be present may be equal to or less than the difference in the total counts of the reference peak, and the total counts of a distribution obtained from performing a calibration measurement with a very low reflectivity target present at a short distance from the cover, such that only a single peak is obtained.

If the peak is determined in step 370 to include counts of photons reflected off a target, in step 380, the separation between a reference time and a point on the peak is determined. The reference time is preferably a time corresponding to the time for a photon reflected off the cover to be detected by the one or more photodetectors. In preferred embodiments, the reference time is the time at which the maximum of the reference peak occurs.

The difference in the time taken by a photon reflected off the cover and a photon reflected off the target is determined by measuring the difference in time between the reference time and a point of the peak. The point may be the maximum of the single peak (the peak including reflections off the cover and off the close target), or may be a later time.

Figures 4A, 4B, and 4C show example histograms 400, 440, 480 of the times at which a photodetector (or a group of associated photodetectors) detected photons over the course of a series of light pulse emissions and detection periods repeated therewith.

Each histogram 400, 440, 480 comprises three hundred and fifty bins, each corresponding to a one hundred picosecond time interval of the repeated detection period, and counts of the total number of photons detected by the photodetector (or group of associated photodetectors) during each of the time periods. The histograms 400, 440, 480 being obtained by performing a number of iterations of the detection period 315 of the method 300 described above.

A first histogram 400, shown in Figure 4A, is obtained by performing the repetitions of the detection period 315 of the method 300 when no target was present within the range and field of view of the photodetector (or group of associated photodetectors). The histogram comprises a background noise level 402 of approximately one hundred counts per bin and a single peak 404 with a maximum count of approximately five hundred and ninety detections in the time interval 2.8-2.9 nanoseconds into the repeated detection period. The peak 404 has a full width at half maximum of approximately 7 time intervals between approximately 2.5 and 3.2 nanoseconds into the repeated detection period. This peak 404 is caused by reflections of light emitted in the light pulses off the cover of the sensor, or material thereon.

Such a histogram 400, may be obtained for one or more photodetectors when performing reference calibration measurements for a time of flight sensor, with no target present and in the field of view of the photodetectors. In such situations the peak 404 may be the reference peak. If peaks are considered to groups of adjacent bins with counts greater than twice the average noise count. Bins with greater than 200 counts per time interval are considered to be comprised by a peak, the peak 404 therefore comprises 7 bins and has a total count of approximately 2950, or 2250 when background or noise counts are subtracted therefrom.

The reference peak total count is therefore 2250 and the reference time is the 2.8-2.9 nanosecond time interval. A pre-set threshold margin that the total count of a single peak must exceed for the peak to be determined to include counts of reflections off a target is also determined to be 500 counts in this example.

The third histogram 480, shown in Figure 4C, is obtained by performing the repetitions of the detection period 315 with a target present at a distance from the cover. The histogram 480 comprises a background noise level 482 of approximately one hundred counts per bin and two peaks 484, 486.

The earliest peak 484 has a maximum count of approximately five hundred and ninety detections within the time interval of 2.9-3.0 nanoseconds into the detection period, and a full width at half maximum of approximately 6 time intervals between approximately 2.5 and 3.2 nanoseconds into the repeated detection period.

The later peak 486 is has a maximum count of approximately five hundred and thirty counted detections within the time interval of 18.0-18.1 nanoseconds into the detection period, with a full width at half maximum of approximately 7 time intervals between 17.7 and 18.4 nanoseconds into the repeated detection period.

The earliest peak 484 is located at a reference time of 2.8-2.9 nanoseconds into the detection period and may therefore be assumed to contain counts of photons reflected off the cover. The earliest peak can also be assumed not to contain reflections off a target close to the cover because the distribution includes at least one later peak 486. A target close the cover would block photons from a more distant target and prevent the appearance of the later peak 486.

When such a histogram 480, with multiple separate peaks 484, 486 is obtained for a photodetector (or group of associated photodetectors) when performing the method 300. The separation in time from the maximum of the earliest peak, to the maximum of each later peak may be measured to determine the distance in travel time between photons reflected off targets and those reflected off the cover. In the histogram 480 shown in Figure 4C, the separation in time is 15.1 nanoseconds.

The distance between the cover and the target whose reflections produced the later peak may be determined by multiplying half the separation in time by the speed of light, obtaining a distance of 2.26 metres (to 2 decimal places).

The second histogram 440 obtained by performing the repetitions of the detection period 315 with a target present close to the cover is shown in Figure 4B. This histogram 440 also comprises a background noise level 442 of approximately one hundred counts per bin and a single peak 444. The single peak 444 includes counts of photons reflected off the cover and photons reflected off the close target. The peak 444 has a maximum count of approximately eight hundred and forty detections within the time interval 3.2-3.3 nanoseconds into the detection period and has a full width at half maximum of approximately 9 time intervals between approximately 2.6 and 3.5 nanoseconds into the detection period.

When a histogram obtained by performing the repetitions of the detection period 315 of the method 300 contains a single peak, such as the peak 444 of the second histogram 440, the single peak is analysed to determine if it comprises reflections off a target close to the cover, or if it comprises reflections off the cover only. This is performed by comparing the single peak 444 to the reference peak 404, for example by comparing the total counts of the single peak 444 to the total counts of the reference peak.

When considering time intervals with counts exceeding two hundred (twice the average background noise count) to be comprised by the peak, the single peak 444 comprises 12 bins and has a total count of approximately 6400, or approximately 5200 when background or noise counts are subtracted therefrom. The total count of the reference peak is 2250 and the pre-set threshold margin that the total count of a single peak must exceed for the peak to be determined to include counts of reflections off a target is 500. As the total count of 5200 exceeds 2750, the single peak 444 is determined to include counts of reflections off the target.

As the counts of reflections off the target are included in the same peak 444 as the counts of reflections off the cover, it is not possible to determine the distance to the target by measuring the separation between two peaks as was performed with histogram 484 in Figure 4C. Instead, the separation between the time maximum of the single peak 444 and the reference time at which the peak of the reference peak due to cover reflections only was located is measured.

The maximum of the single peak is in the time interval 3.2-3.3 nanoseconds into the detection period and the reference time is the 2.8-2.9 nanosecond time interval. The separation in time is therefore 0.4 nanoseconds and the distance to the close target is therefore 0.06 metres (to 2.d.p).

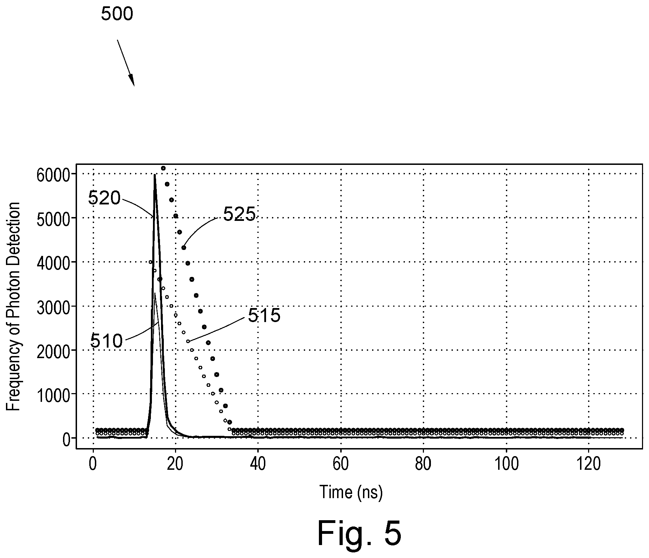

Figure 5 is a graph 500 showing a pair of reference distributions 510, 520 obtained for two different photodetectors or groups thereof which detect reflections off the covers thereof at different rates, and two threshold functions 515, 525 for detecting targets for the two sensors. The thresholds being derived from the reference distributions.

The reference distributions 510, 520 are each a distributions of the times at which a single photodetector, or a group of associated photodetectors detected photons during reference calibration measurements with little or no ambient light and no objects within the range and field of view of the at least one photodetectors. The reference distributions 510, 520 are obtained by performing the repeated detection period steps 310, 320, 330 and 340 of the method 300 with little or no ambient light and no objects within the range and field of view of the at least one photodetectors.

Both reference distributions 510, 520 comprise negligible noise or background counts due to the lack of ambient light, and comprise only a single peak due to reflections off the cover of the photodetector with which they were obtained. The second reference distribution 520 comprises a larger peak with a greater maximum detection frequency than the first reference distribution 510, perhaps as a consequence of a greater degree of contamination on the cover over the photodetectors.

Thresholds 515, 525 for detecting a peak comprising counts of photons reflected off of a target is derived from each of the reference distributions 510, 520. The first threshold function 515 is derived from the first reference distribution 510 and the second threshold function 525 is derived from the second reference distribution.

Each of the threshold functions 515, 525 is a function of the time of the distribution. Each of the threshold functions 515, 525 comprises a first earliest portion from 0 nanoseconds to time at which the reference peaks of the reference distributions begin at approximately 14 nanoseconds, a second intermediate portion from approximately 14 nanoseconds to approximately 34 nanoseconds, which includes that times at which the reference peaks are located and a portion of time thereafter, and a third latest portion from approximately 34 nanoseconds onwards.

The threshold level for detecting a peak comprising counts of target reflections is close to 0 counts per unit time interval in the first and third portions of the threshold functions 515, 525. For such a threshold to avoid incorrect detections of peaks, a background or noise level must be subtracted from a distribution obtained using the method 300 with the photodetectors before comparing it to the threshold 515, 525. In alternative thresholds, the threshold functions may comprise constant thresholds above an expected noise level in these portions.

The threshold level for detecting a peak comprising counts of target reflections in the intermediate portions of the threshold functions 515, 525 is an inverse linear function sloping downwards from above the maximum frequency of photon detections of the reference distribution 510, 520 from which they are derived, to the threshold level of the third later portion.

Therefore, the earlier a peak is located after the time at which a peak due to reflections off of the glass occurs, and the more likely the peak is to include counts of photons reflected off of the glass, the lower higher the threshold level for detecting a peak which comprises counts of reflections off of a target. Such threshold functions 515, 525 may therefore be used to detect both peaks comprising photons reflected off both a target and the cover and later separate peaks comprising only counts of reflections off of targets.

## Claims

1. A method of measuring a distance using a time of flight sensor (100, 150, 200) comprising a substantially transparent cover (108, 158) covering a light emitter (102, 152, 205) and one or more photodetectors (104, 154, 210), the method comprising:
emitting a series of pulses of light from the light emitter (102, 152, 205);
using the one or more photodetectors (104, 154, 210) to obtain a distribution of times at which at least one photodetector of the one or more photodetectors detected photons after each emission of the series of pulses of light; and **characterized in that**:
if the distribution of times comprises only a single peak (404, 444):
analysing the single peak (404, 444) to determine if the single peak (404, 444) includes counts of photons reflected from a target (110, 160, 250), and
if the single peak includes counts of photons reflected from the target (110, 160, 250), measuring the separation between a reference time and a point of the single peak (444) to determine the distance to the target (110, 160, 250);
if the distribution comprises two or more separate peaks (484, 486):
measuring the separation in time between the earliest peak (484) and at least one of the one or more other peaks (486) to determine the distance to the target (110, 160, 250);
wherein the distribution is obtained in a plurality of periods each containing the emission of one of the pulses of light, each period being divided into an identical series of time intervals relative to the emission contained therein.

2. A method according to claim 1 wherein analysing the single peak (404, 444) to determine if it includes counts of photons reflected from the target (110, 160, 250) comprises comparing one or more parameters of the peak (404, 444) to one or more parameters of a reference peak of a reference distribution of times obtained by:
emitting a series of pulses of light from the light emitter (102, 152, 205) with no objects within a range and field of view of the at least one photodetectors (104, 154, 210); and
using the one or more photodetectors (104, 154, 210) to obtain the reference distribution of times at which the at least one photodetector of the one or more photodetectors (104, 154, 210) detected photons after each emission of the series of pulses of light.

3. A method according to claim 2 wherein the one or more parameters of the reference peak include the total number of photons detected in the reference peak and the time in the distribution at which the reference peak is located.

4. A method according to claim 3 wherein a background or noise level of the distribution comprising the single peak (404, 444) is added to the reference peak or subtracted from the single peak (404, 444) prior to said comparing.

5. A method according to claim 1 wherein the distribution of times is a distribution of times at which at least one photodetector of the one or more photodetectors (104, 154, 210) detected photons before, during and after each emission of the series of pulses of light.

6. A method according to claim 1 wherein the times at which the at least one photodetector detected photons are relative to an emission of one of the series of pulses of light during or immediately preceding a detection period in which the photon was detected.

7. A method according to claim 1 wherein the distributions of times is obtained by counting a total number of photons detected by the at least one photodetectors (104, 154, 210) during all of the of time intervals at each of a plurality of times relative to the emission during the detection period comprising that time interval.

8. A method according to claim 7 wherein a counted number of photons detected by the one or more photodetectors (104, 154, 210) during all of the time intervals at each of the plurality of times are or contribute to values of the distribution for time intervals at the plurality of times.

9. A method according to claim 1 wherein the series of pulses of light comprises at least 75,000 pulses of light.

10. A method according to claim 1 wherein the distribution is a histogram.

11. A method according to claim 1 wherein peaks are parts of the distribution above a predetermined threshold.

12. A method according to claim 1 wherein the light emitter is a vertical-cavity surface-emitting laser (205).

13. A method according to claim 1 wherein each of the one or more photodetectors is a single photon avalanche diode (210).

14. A method according to claim 1 wherein the one or more photodetectors (104, 154, 210) are a plurality of photodetectors, and are used to obtain a plurality of distributions, each distribution being the distribution of times at which one or more photodetectors of the plurality of photodetectors (104, 154, 210) detected photons after each emission of the emissions of the pulses of light.

15. A method according to claim 1, wherein the light emitter (102, 152, 205) forms part of an optical stack and where the method calibrates the time of flight sensor (110, 160, 200) in conjunction with the optical stack.

16. A time of flight sensor (110, 160, 200) configured to perform a method according to claim 1.

17. A device comprising a sensor (110, 160, 200) according to claim 16.

18. A non-transitory storage medium comprising computer instructions executable by one or more processors comprised by or in communication with a time of flight sensor (110, 160, 200) comprising a light emitter (102, 152, 205) and one or more photodetectors (104, 154, 210), the computer instructions when executed by the one or more processors causing the time of flight sensor (110, 160, 200) to perform a method according to claim 1.

## Patentansprüche

1. Verfahren zum Messen einer Entfernung unter Verwendung eines Laufzeitsensors (100, 150, 200), der eine im Wesentlichen durchsichtige Abdeckung (108, 158) umfasst, die eine Lichtemissionseinrichtung (102, 152, 205) und einen oder mehrere Photodetektoren (104, 154, 210) abdeckt, wobei das Verfahren Folgendes umfasst:
Emittieren einer Reihe von Lichtimpulsen von der Lichtemissionseinrichtung (102, 152, 205);
Verwenden des einen oder der mehreren Photodetektoren (104, 154, 210), um eine Verteilung von Zeiten zu erhalten, zu denen mindestens ein Photodetektor des einen oder der mehreren Photodetektoren nach jeder Emission der Reihe von Lichtimpulsen Photonen detektiert hat; und
**gekennzeichnet durch**:
dann, wenn die Verteilung von Zeiten lediglich eine einzige Spitze (404, 444) umfasst:
Analysieren der einzigen Spitze (404, 444), um zu bestimmen, ob die einzige Spitze (404, 444) Zählungen von Photonen enthält, die von einem Ziel (110, 160, 250) reflektiert wurden, und
dann, wenn die einzige Spitze Zählungen von Photonen enthält, die vom Ziel (110, 160, 250) reflektiert wurden, Messen des Abstands zwischen einer Referenzzeit und einem Punkt der einzigen Spitze (444), um die Entfernung zum Ziel (110, 160, 250) zu bestimmen;
dann, wenn die Verteilung zwei oder mehr getrennte Spitzen (484, 486) umfasst:
Messen des zeitlichen Abstands zwischen der frühesten Spitze (484) und mindestens einer der einen oder mehreren anderen Spitzen (486), um die Entfernung zum Ziel (110, 160, 250) zu bestimmen;
wobei die Verteilung in mehreren Zeiträumen erhalten wird, die jeweils die Emission eines der Lichtimpulse enthalten, wobei jeder Zeitraum in eine identische Reihe von Zeitintervallen in Bezug auf die darin enthaltene Emission unterteilt ist.

2. Verfahren nach Anspruch 1, wobei das Analysieren der einzigen Spitze (404, 444), um zu bestimmen, ob sie Zählungen von Photonen enthält, die vom Ziel (110, 160, 250) reflektiert wurden, das Vergleichen eines oder mehrerer Parameter der Spitze (404, 444) mit einem oder mehreren Parametern einer Referenzspitze einer Referenzverteilung von Zeiten umfasst, die erhalten wird durch:
Emittieren einer Reihe von Lichtimpulsen von der Lichtemissionseinrichtung (102, 152, 205) ohne Gegenstände innerhalb einer Reichweite und eines Blickfelds des mindestens einen Photodetektors (104, 154, 210); und
Verwenden des einen oder der mehreren Photodetektoren (104, 154, 210), um die Referenzverteilung von Zeiten, zu denen mindestens ein Photodetektor des einen oder der mehreren Photodetektoren (104, 154, 210) nach jeder Emission der Reihe von Lichtimpulsen Photonen detektiert hat, zu erhalten.

3. Verfahren nach Anspruch 2, wobei der eine oder die mehreren Parameter der Referenzspitze die Gesamtanzahl der Photonen, die in der Referenzspitze detektiert wurden, und die Zeit in der Verteilung, bei der die Referenzspitze angeordnet ist, enthalten.

4. Verfahren nach Anspruch 3, wobei ein Hintergrund oder Rauschpegel der Verteilung, die die einzige Spitze (404, 444) umfasst, vor dem Vergleichen zur Referenzspitze addiert oder von der einzigen Spitze (404, 444) subtrahiert wird.

5. Verfahren nach Anspruch 1, wobei die Verteilung von Zeiten eine Verteilung von Zeiten ist, zu denen mindestens ein Photodetektor des einen oder der mehreren Photodetektoren (104, 154, 210) vor, während und nach jeder Emission der Reihe von Lichtimpulsen Photonen detektiert hat.

6. Verfahren nach Anspruch 1, wobei sich die Zeiten, zu denen der mindestens eine Photodetektor Photonen detektiert hat, auf eine Emission einer der Reihen von Lichtimpulsen während eines Detektionszeitraums, in dem das Photon detektiert wurde, oder diesem unmittelbar vorhergehend beziehen.

7. Verfahren nach Anspruch 1, wobei die Verteilungen der Zeiten durch Zählen einer Gesamtanzahl der Photonen erhalten werden, die durch den mindestens einen Photodetektor (104, 154, 210) während aller Zeitintervalle zu jeder von mehreren Zeiten bezüglich der Emission während des Detektionszeitraums, der dieses Zeitintervall umfasst, detektiert wurden.

8. Verfahren nach Anspruch 7, wobei eine gezählte Anzahl der Photonen, die durch den einen oder die mehreren Photodetektoren (104, 154, 210) während aller Zeitintervalle zu jeder der mehreren Zeiten detektiert wurden, Werte der Verteilung für die Zeitintervalle zu den mehreren Zeiten sind oder dazu beitragen.

9. Verfahren nach Anspruch 1, wobei die Reihe von Lichtimpulsen mindestens 75.000 Lichtimpulse umfasst.

10. Verfahren nach Anspruch 1, wobei die Verteilung ein Histogramm ist.

11. Verfahren nach Anspruch 1, wobei Spitzen Abschnitte der Verteilung über einem vorgegebenen Schwellenwert sind.

12. Verfahren nach Anspruch 1, wobei die Lichtemissionseinrichtung ein Laser (205) mit vertikaler Oberflächenemission ist.

13. Verfahren nach Anspruch 1, wobei jeder des einen oder der mehreren Photodetektoren eine Einzelphotonen-Lawinendiode (210) ist.

14. Verfahren nach Anspruch 1, wobei der eine oder die mehreren Photodetektoren (104, 154, 210) mehrere Photodetektoren sind und verwendet werden, um mehrere Verteilungen zu erhalten, wobei jede Verteilung die Verteilung von Zeiten ist, zu denen einer oder mehrere Photodetektoren der mehreren Photodetektoren (104, 154, 210) nach jeder Emission der Emissionen von Lichtimpulsen Photonen detektiert haben.

15. Verfahren nach Anspruch 1, wobei die Lichtemissionseinrichtung (102, 152, 205) eine Komponente eines optischen Stapels bildet und wobei das Verfahren den Laufzeitsensor (110, 160, 200) in Verbindung mit dem optischen Stapel kalibriert.

16. Laufzeitsensor (110, 160, 200), der konfiguriert ist, ein Verfahren nach Anspruch 1 durchzuführen.

17. Vorrichtung, die einen Sensor (110, 160, 200) nach Anspruch 16 umfasst.

18. Nichtflüchtiges Speichermedium, das Computeranweisungen umfasst, die durch einen oder mehrere Prozessoren ausführbar sind, die von einem Laufzeitsensor (110, 160, 200) umfasst werden oder sich mit diesem in Kommunikation befinden, der eine Lichtemissionseinrichtung (102, 152, 205) und einen oder mehrere Photodetektoren (104, 154, 210) umfasst, wobei die Computeranweisungen dann, wenn sie durch den einen oder die mehreren Prozessoren ausgeführt werden, bewirken, dass der Laufzeitsensor (110, 160, 200) ein Verfahren nach Anspruch 1 durchführt.

## Revendications

1. Procédé de mesure d'une distance au moyen d'un capteur temps de vol (100, 150, 200) comprenant un couvercle (108, 158) sensiblement transparent couvrant un émetteur de lumière (102, 152, 205) et un ou plusieurs photodétecteurs (104, 154, 210), le procédé comprenant :
l'émission d'une série d'impulsions lumineuses depuis l'émetteur de lumière (102, 152, 205) ;
l'utilisation du ou des photodétecteurs (104, 154, 210) pour obtenir une distribution d'instants auxquels au moins un photodétecteur du ou des photodétecteurs a détecté des photons après chaque émission de la série d'impulsions lumineuses ; et **caractérisé en ce que** :
si la distribution d'instants ne comprend qu'un unique pic (404, 444) :
l'analyse de l'unique pic (404, 444) afin de déterminer si l'unique pic (404, 444) comprend des comptages de photons réfléchis par une cible (110, 160, 250), et
si l'unique pic comporte des comptages de photons réfléchis par la cible (110, 160, 250), la mesure de l'écart entre un instant de référence et un point de l'unique pic (444) afin de déterminer la distance à la cible (110, 160, 250) ;
si la distribution comprend au moins deux pics distincts (484, 486) :
la mesure de l'écart dans le temps entre le pic le plus précoce (484) et au moins un du ou des autres pics (486) afin de déterminer la distance à la cible (110, 160, 250) ;
dans lequel la distribution est obtenue sur une pluralité de périodes contenant chacune l'émission d'une des impulsions lumineuses, chaque période étant divisée en une série identique d'intervalles de temps par rapport à l'émission qu'elle contient.

2. Procédé selon la revendication 1, dans lequel l'analyse de l'unique pic (404, 444) afin de déterminer s'il comporte des comptages de photons réfléchis par la cible (110, 160, 250) comprend la comparaison d'un ou de plusieurs paramètres du pic (404, 444) avec un ou plusieurs paramètres d'un pic de référence d'une distribution de référence d'instants obtenue par :
l'émission d'une série d'impulsions lumineuses depuis l'émetteur de lumière (102, 152, 205) sans objets présents à portée et dans un champ de vision de l'au moins un photodétecteur (104, 154, 210) ; et
l'utilisation du ou des photodétecteurs (104, 154, 210) pour obtenir une distribution de référence d'instants auxquels l'au moins un photodétecteur du ou des photodétecteurs (104, 154, 210) a détecté des photons après chaque émission de la série d'impulsions lumineuses.

3. Procédé selon la revendication 2, dans lequel le ou les paramètres du pic de référence comportent le nombre total de photons détectés dans le pic de référence et l'instant dans la distribution auquel le pic de référence est situé.

4. Procédé selon la revendication 3, dans lequel un niveau de fond ou de bruit de la distribution comprenant l'unique pic (404, 444) est ajouté au pic de référence ou soustrait de l'unique pic (404, 444) avant ladite comparaison.

5. Procédé selon la revendication 1, dans lequel la distribution d'instants est une distribution d'instants auxquels au moins un photodétecteur du ou des photodétecteurs (104, 154, 210) a détecté des photons avant, pendant et après chaque émission de la série d'impulsions lumineuses.

6. Procédé selon la revendication 1, dans lequel les instants auxquels l'au moins un photodétecteur a détecté des photons sont par rapport à une émission d'une de la série d'impulsions lumineuses pendant ou immédiatement avant une période de détection au cours de laquelle le photon a été détecté.

7. Procédé selon la revendication 1, dans lequel la distribution d'instants est obtenue par comptage d'un nombre total de photons détectés par l'au moins un photodétecteur (104, 154, 210) pendant tous les intervalles de temps à chacun d'une pluralité d'instants par rapport à l'émission pendant la période de détection comprenant cet intervalle de temps.

8. Procédé selon la revendication 7, dans lequel un nombre compté de photons détectés par le ou les photodétecteurs (104, 154, 210) pendant tous les intervalles de temps à chacun de la pluralité d'instants constitue, ou contribue à, des valeurs de la distribution pour des intervalles de temps à la pluralité d'instants.

9. Procédé selon la revendication 1, dans lequel la série d'impulsions lumineuses comprend au moins 75 000 impulsions lumineuses.

10. Procédé selon la revendication 1, dans lequel la distribution est un histogramme.

11. Procédé selon la revendication 1, dans lequel les pics sont des parties de la distribution au-dessus d'un seuil prédéterminé.

12. Procédé selon la revendication 1, dans lequel l'émetteur de lumière est un laser à cavité verticale émettant par la surface (205).

13. Procédé selon la revendication 1, dans lequel chacun du ou des photodétecteurs est une diode à avalanche monophotonique (210).

14. Procédé selon la revendication 1, dans lequel le ou les photodétecteurs (104, 154, 210) constituent une pluralité de photodétecteurs, et sont utilisés pour obtenir une pluralité de distributions, chaque distribution étant la distribution d'instants auxquels un ou plusieurs photodétecteurs de la pluralité de photodétecteurs (104, 154, 210) ont détecté des photons après chaque émission des émissions des impulsions lumineuses.

15. Procédé selon la revendication 1, dans lequel l'émetteur de lumière (102, 152, 205) fait partie d'un empilement optique, le procédé étalonnant le capteur temps de vol (110, 160, 200) conjointement avec l'empilement optique.

16. Capteur temps de vol (110, 160, 200) configuré pour réaliser un procédé selon la revendication 1.

17. Dispositif comprenant un capteur (110, 160, 200) selon la revendication 16.

18. Support de stockage non transitoire comprenant des instructions d'ordinateur exécutables par un ou plusieurs processeurs compris dans, ou en communication avec, un capteur temps de vol (110, 160, 200) comprenant un émetteur de lumière (102, 152, 205) et un ou plusieurs photodétecteurs (104, 154, 210), les instructions d'ordinateur, lorsqu'elles sont exécutées par le ou les processeurs, amenant le capteur temps de vol (110, 160, 200) à réaliser un procédé selon la revendication 1.
